# EUROPEAN PATENT APPLICATION

(11) **EP 4 438 646 A1**
(43) Date of publication of application: **02.10.2024**
(21) Application number: 23164709.0
(22) Date of filing: 28.03.2023
(51) Int. Cl.: C08G 18/00, C08G 18/02, C08G 18/18, C08G 18/76, C08G 59/00, C09D 163/00

(54) **EPOXY-GROUP TERMINATED AND ISOCYANURATE-GROUP CONTAINING POLYOXAZOLIDINONES AND THEIR USE IN COATING COMPOSITIONS**

(71) Applicant: Covestro Deutschland AG, 51373 Leverkusen (DE)
(72) Inventor: LATORRE MARTINEZ, Irene Cristina, 51373 Leverkusen (DE); LAEMMERHOLD, Kai, 51519 Odenthal (DE); WOODS, Laura, 40597 Düsseldorf (DE); WESTHUES, Stefan, 51379 Leverkusen (DE); YOGENDRA, Sivathmeehan, 40211 Düsseldorf (DE); MOVAHHED, Sohajl, 50827 Köln (DE); LUDEWIG, Michael, 51519 Odenthal (DE); GRAHL, Michael, 51371 Leverkusen (DE); WOLF, Aurel, 42489 Wülfrath (DE); BORN, Ralph-Georg, 42855 Remscheid (DE); GUERTLER, Christoph, 50735 Köln (DE); AMMENHÄUSER, Robin, 52223 Stolberg (DE); KLEIN, Patrick, 51063 Köln (DE); GLAßNER, Mathias, 65203 Wiesbaden (DE)
(74) Representative: Levpat

(57) **Abstract**

The invention is related to a process for producing epoxy-group terminated and isocyanurate-group containing polyoxazolidinones comprising reacting at least one monomeric polyisocyanate compound (A) with at least one polyepoxide compound (B) in the presence of at least one catalyst (C), at a molar ratio of the epoxy groups of the at least one polyepoxide compound (B) to the isocyanate groups of the at least one monomeric polyisocyanate compound (A) of ≥ 2:1 to ≤ 25:1, wherein the at least one monomeric polyisocyanate compound (A) is added to the at least one polyepoxide compound (B) over a period of ≥ 1 minute to ≤ 50 minutes at a reaction temperature (T_{R}) of ≥ 105°C to ≤ 160° C. The invention is also related to the resulting epoxy-group terminated and isocyanurate-group containing polyoxazolidinones, as well as to a composition at least comprising the resulting epoxy-group terminated and isocyanurate-group containing polyoxazolidinones and compounds having at least one group that is reactive towards terminal epoxy-groups, furthermore to the process for the preparation of said composition, the use of this composition as or in a coating formulation, to a coating formulation comprising at least this composition, to a process for coating a substrate comprising the step of applying of this coating formulation onto the substrate, and to the correspondingly coated substrate.

## Description

The invention is related to a process for producing epoxy-group terminated and isocyanurate-group containing polyoxazolidinones comprising reacting at least one monomeric polyisocyanate compound (A) with at least one polyepoxide compound (B) in the presence of at least one catalyst (C), at a molar ratio of the epoxy groups of the at least one polyepoxide compound (B) to the isocyanate groups of the at least one monomeric polyisocyanate compound (A) of ≥ 2:1 to ≤ 25:1, wherein the at least one monomeric polyisocyanate compound (A) is added to the at least one polyepoxide compound (B) over a period of ≥ 1 minute to ≤ 50 minutes at a reaction temperature (T_{R}) of ≥ 105°C to ≤ 160° C. The invention is also related to the resulting epoxy-group terminated and isocyanurate-group containing polyoxazolidinones, as well as to a composition at least comprising the resulting epoxy-group terminated and isocyanurate-group containing polyoxazolidinones and compounds having at least one group that is reactive towards terminal epoxy-groups, furthermore to the process for the preparation of said composition, the use of this composition as or in a coating formulation, to a coating formulation comprising at least this composition, to a process for coating a substrate comprising the step of applying of this coating formulation onto the substrate, and to the correspondingly coated substrate.

One challenge in the coatings technology is the stacking ability of coated substrates. An improved stacking ability of coated substrates results in saving costs and an increasing efficiency of the coated substrate.

Epoxy-group terminated polyoxazolidinones and their use in coating compositions are well known in the state of the art: WO 2020/249471 A1 describes the synthesis of such polyoxazolidinones wherein a high excess of a polyepoxide is reacted with a polyisocyanate. WO 2022/122606 A1 discloses the use of such epoxy-group terminated polyoxazolidinones in formulations for coatings, especially can coatigs.

Surprisingly , it has been found that formulations based on epoxy-group terminated polyoxazolidinones, resulting from the special synthesis process according to claim 1 and having a high amount of isocyanurate groups beside the terminal epoxy-groups lead to coatings with a high stacking ability.

One object of the present invention is a process and the resulting epoxy-group terminated and isocyanurate-group containing polyoxazolidinones:
A process for producing an epoxy-group terminated and isocyanurate-group containing polyoxazolidinone comprising
reacting at least one monomeric polyisocyanate compound (A) with at least one polyepoxide compound (B) in the presence of at least one catalyst (C),
at a molar ratio of the epoxy groups of the at least one polyepoxide compound (B) to the isocyanate groups of the at least one monomeric polyisocyanate compound (A) of ≥ 2:1 to ≤ 25: 1,
wherein the at least one monomeric polyisocyanate compound (A) is added to the at least one polyepoxide compound (B) over a period of ≥ 1 minute to ≤ 50 minutes at a reaction temperature (T_{R}) of ≥ 105°C to ≤ 160° C.

As used herein, the term "polyoxazolidinone" is meant to denote compounds containing at least two oxazolidinone groups in the molecule. The term "epoxy-group terminated" polyoxazolidinone is related to polyoxazolidinone compounds, wherein the molar ratio of the at least one polyepoxide compound (B) to the isocyanate groups of the at least one monomeric polyisocyanate compound (A) is larger than 2:1, so no terminal isocyanate groups are present within the polyoxazolidinone compound according to the present invention.

### Compound/s (A)

As used herein, the term "polyisocyanate compound" is meant to denote compounds having two or more isocyanate groups.

In an embodiment of the method according to the invention, the at least one monomeric polyisocyanate compound (A) is selected from the group consisting of monomeric aliphatic linear polyisocyanate compounds, monomeric aliphatic branched polyisocyanate compounds, monomeric cycloaliphatic polyisocyanate compounds, monomeric araliphatic polyisocyanate compounds and monomeric aromatic polyisocyanate compounds. In a preferred embodiment the at least one monomeric polyisocyanate compound (A) is at least one monomeric aromatic polyisocyanate compound and/or at least one monomeric araliphatic polyisocyanate compound.

As used herein, the term "monomeric aliphatic linear polyisocyanate compound" is meant to denote monomeric compounds having two or more isocyanate groups and aliphatic linear moieties.

As used herein, the term "monomeric aliphatic branched polyisocyanate compound" is meant to denote monomeric compounds having two or more isocyanate groups and aliphatic branched moieties.

As used herein, the term "monomeric cycloaliphatic polyisocyanate compound" is meant to denote monomeric compounds having two or more isocyanate groups and cycloaliphatic moieties.

As used herein, the term "monomeric araliphatic polyisocyanate compound" is meant to denote monomeric compounds having two or more isocyanate groups and araliphatic moieties.

As used herein, the term "monomeric aromatic polyisocyanate compound" is meant to denote monomeric compounds having two or more isocyanate groups and aromatic moieties.

The monomeric polyisocyanate compounds (A) and their preparation are in general known to the skilled artisan, for example by phosgenation in the liquid or gas phase or by a phosgene-free route, for example by thermal urethane cleavage.

Examples of monomeric polyisocyanate compounds (A), which are suitable for use in the method according to the invention, are 1,4-diisocyanatobutane, 1,5-diisocyanatopentane (pentamethylene diisocyanate, PDI), 1,6-diisocyanatohexane (hexamethylene diisocyanate, HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,12-diisocyanatododecane, 1,3- and 1,4-diisocyanatocyclohexane, 1,3- and 1,4-bis(isocyanatomethyl)cyclohexane, 1-isocyanato-3,3,5-trimethyl-5-isocyanatomethylcyclohexane (isophorone diisocyanate, IPDI), 2,4'- and 4,4'-diisocyanatodicyclohexylmethane (H12-MDI), 4,4'-diisocyanato-2,2-dicyclohexyl propane, 1-isocyanato-1-methyl-4(3)isocyanatomethylcyclohexane, bis(isocyanatomethyl)norbomane, 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 1,3-bis(isocyanatomethyl)-4-methylbenzene, 1,3-bis(isocyanatomethyl)-4-ethylbenzene, 1,3-bis(isocyanatomethyl)-5-methylbenzene, 1,3-bis(iscyanatomethyl)-2,4,6-trimethlybenzene, 1,3-bis(isocyanatomethyl)-4,5-dimethylbenzene, 1,4-bis(isocyanatomethyl)-2,5-dimethylbenzene, 1,4-bis(isocyanatomethyl)-2,3,5,6-tetramethylbenzene, 1,3-bis(isocyanatomethyl)-5-tert-butylbenzene, 1,3-bis(isocyanatomethyl)-4-chlorobenzene, 1,3-bis(isocyanatomethyl)-4,5-dichlorobenzene, 1,3-bis(isocyanatomethyl)-2,4,5,6-tetrachlorobenzene, 1,4-bis(isocyanatomethyl)-2,3,5,6-tetrachlorobenzene, 1,4-bis(isocyanatomethyl)-2,3,5,6-tetrabromobenzene, 1,4-bis(2-isocyanatoethyl)benzene and 1,4-bis(isocyanatomethyl)naphthalene, 1,2-, 1,3- and 1,4-diisocyanatobenzene (phenylene diisocyanate), 2,4- and 2,6-diisocyanatotoluene (toluene diisocyanate, TDI), 2,3,5,6-tetramethyl-1,4-diisocyanatobenzene, the isomeric diethylphenylene diisocyanates, diisopropylphenylene diisocyanates, diisododecylphenylene diisocyanates and biphenyl diisocyanates, 3,3'-dimethoxybiphenyl-4,4'-diisocyanate, 2,2`-, 2,4'- and 4,4'-diisocyanatodiphenylmethane (MDI), 3,3'-dimethyl diphenylmethane-4,4'-diisocyanate, 4,4'-diisocyanatodiphenylethane, 1,5-diisocyanatonaphthalene (NDI), diphenylether diisocyanate, ethylene glycol diphenylether diisocyanate, diethylene glycol diphenylether diisocyanate, 1,3-propylene glycol diphenylether diisocyanate, benzophenone diisocyanate, triisocyanatobenzene, 2,4,6-triisocyanatotoluene, trimethylbenzene triisocyanate, diphenylmethane-2,4,4'-triisocyanate, 3-methyldiphenylmethane-4,6,4'-triisocyanate, the isomeric naphthalene triisocyanates and methylnaphthalene diisocyanates, triphenylmethane triisocyanate, 2,4-diisocyanato-1-[(5-isocyanato-2-methylphenyl)methyl]benzene, 4-methyl-diphenylmethane-3,5,2',4',6'-pentaisocyanate, and also the polynuclear homologues of diisocyanatodiphenylmethane known as "polymer-MDI".

Preferably the at least one monomeric polyisocyanate compound (A') is selected from the group consisting of 2,2`-, 2,4'- and 4,4'-diisocyanatodiphenylmethane (MDI), the polynuclear homologues of diisocyanatodiphenylmethane, known as "polymer-MDI", 2,4- and 2,6-diisocyanatotoluene (toluene diisocyanate, TDI), 1,3- and 1,4-bis(isocyanatomethyl)benzene (xylylene diisocyanate, XDI), 1,3- and 1,4-bis(2-isocyanatopropan-2-yl)benzene (tetramethylxylylene diisocyanate, TMXDI), 3,3'-dimethyl diphenylmethane-4,4'-diisocyanate, 4,4'-diisocyanatodiphenylethane, 1,5-diisocyanatonaphthalene (NDI) and mixtures thereof.

### Compound/s (B)

As used herein, the term "polyepoxide compound" is meant to denote compounds having two or more epoxide groups.

In an embodiment of the invention, the at least one polyepoxide compound (B) is selected from the group consisting of aliphatic linear polyepoxide compounds, aliphatic branched polyepoxide compounds and aromatic polyepoxide compounds. In a preferred embodiment the at least one polyepoxide compound (B) is at least one aliphatic linear polyepoxide compound and/or at least one aliphatic branched polyepoxide compound.

As used herein, the term "aliphatic linear polyepoxide compound" is meant to denote compounds having two or more epoxide groups and also aliphatic linear moieties.

As used herein, the term "aliphatic branched polyepoxide compound" is meant to denote compounds having two or more epoxide groups and also aliphatic branched moieties.

As used herein, the term "aromatic polyepoxide compound" is meant to denote compounds having two or more epoxide groups and also aromatic moieties.

Examples of polyepoxide compounds (B), which are suitable for use in the method according to the invention, are neopentyl glycol diglycidyl ether, hydrogenated bisphenol A diglycidyl ether, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, glycerol triglycidyl ether, polyglycerol polyglycidyl ether, polyglycidyl ether of ethoxylated trimethylolpropane, poly(tetramethylene-oxid) diglycidyl ether, pentaeritrol polyglycidyl ether, vinylcyclohexene diepoxide, the diepoxides of double unsaturated fatty acid C1 - C18 alkyl esters, polyepoxides of double unsaturated ethoxylated fatty alcohols, Aliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, propanediol diglycidyl ether, 1,4-butanediol diglycidyl ether, 1,6-hexanediol diglycidyl ether, octanediol diglycidyl ether, trimethylolpropane polyglycidyl ether, glycerol polyethylene triglycidyl ether, 2-ethyl hexyl diglycidyl ether, isosorbide diglycidyl ether, resorcinol diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether, tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, trimellitic acid triglycidyl ester, 1,4-cyclohexane dicarboxylic acid diglycidyl ester, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, tetrabromobisphenol A, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether, as well as chlorinated and brominated varieties of the aforementioned components.

Preferably the at least one polyepoxide compound (B) is selected from the group consisting of hydrogenated bisphenol A diglycidyl ether, polyethylene glycol diglycidyl ether, polypropylene glycol diglycidyl ether, glycerol triglycidyl ether, polyglycidyl ether of ethoxylated trimethylolpropane, poly(tetramethylene-oxid) diglycidyl ether, pentaeritrol polyglycidyl ether, the diepoxides of double unsaturated fatty acid C1 - C18 alkyl estersAliphatic di- or polydiglycidyl ether, derived via epoxidation of di- or polyfunctional alcohols with aliphatic linear, aliphatic branched, or cycloaliphatic moieties consisting of 2-40 carbon atoms, for example ethanediol diglycicyl ether, 1,4-butanediol diglycidyl ether, 1,6-hexanediol diglycidyl ether, trimethylolpropane polyglycidyl ether, glycerol polyethylene triglycidyl ether, 2-ethyl hexyl diglycidyl ether, isosorbide diglycidyl ether, bisphenol A diglycidyl ether, bisphenol-F diglycidyl ether, bisphenol-S diglycidyl ether, tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate, cardanol-based diglycidyl ether, Hydrochinone diglycidyl ether, 4,4'-dihydroxyphenyl diglycicdyl ether, Bis-(4-hydroxyphenyl)-1,1-ethane diglycidyl ether, Bis-(4-hydroxyphenyl)-1,1-isobutane digylcidyl ether, Bis-(4-hydroxyphenyl) ether digylcidyl ether.

In a more preferred embodiment of the invention, the at least one polyepoxide compound (B) is selected from the group consisting of ethanediol diglycidyl ether, butanediole diglycidyl ether, hexane diol diglycidyl ether, trimethylopropane triglycidyl ether, bisphenol A diglycidyl ether, bisphenol-F diglycidyl ether, bisphenol-S diglycidyl ether, 2-dihydroxybenzene diglycidyl ether, 1,4-dihydroxybenzene diglycidyl ether, diglycidyl isophthalate.

Most preferred the at least one polyepoxide compound (B) is selected from the group consisting of ethanediol diglycidyl ether, butanediole diglycidyl ether, hexane diol diglycidyl ether and trimethylopropane triglycidyl ether.

In a first alternative preferred embodiment of the invention the at least one monomeric polyisocyanate compound (A) is at least one monomeric araliphatic polyisocyanate compound and the at least one polyepoxide compound (B) is at least one aliphatic linear polyepoxide compound and/or at least one aliphatic branched polyepoxide compound.

In a second alternative preferred embodiment of the invention the at least one monomeric polyisocyanate compound (A) is at least one monomeric araliphatic polyisocyanate compound and the at least one polyepoxide compound (B) is at least one aromatic polyepoxide compound.

In a third alternative preferred embodiment of the invention the at least one monomeric polyisocyanate compound (A) is at least one monomeric aromatic polyisocyanate compound and the at least one polyepoxide compound (B) is at least one aliphatic linear polyepoxide compound and/or at least one aliphatic branched polyepoxide compound.

In a fourth alternative preferred embodiment of the invention the at least one monomeric polyisocyanate compound (A) is at least one monomeric aromatic polyisocyanate compound and the at least one polyepoxide compound (B) is at least one aromatic polyepoxide compound.

A mixture of one or more of the aforementioned monomeric araliphatic polyisocyanate compounds (A), monomeric aromatic polyisocyanate compounds (A), aliphatic linear polyepoxide compounds (B), aliphatic branched polyepoxide compounds (B) and/or aromatic polyepoxide compound (B) can also be used.

In a preferred embodiment of the invention, the molar ratio of the at least one polyepoxide compound (B) to the isocyanate groups of the at least one monomeric polyisocyanate compound (A) is from ≥ 2.6:1 to ≤ 7:1, preferably from ≥ 2.7:1 to ≤ 6:1, more preferably from ≥ 2.8:1 to ≤ 5:1. If the latter molar ratio is higher than 7:1, resulting epoxy-terminated oxazolidinones, the oxazolidinone group ratio in the overall mixture is diluted by the epoxy compound (B) in such a way that the mixture will not give a significant benefit in the final polymer, compared to only using the epoxy compound (B) in further polymerization applications.

### catalyst/s (C)

In a preferred embodiment of the invention the at least one catalyst (C) is at least one compound selected from the group consisting LiCl, LiBr, LiI, MgCl2, MgBr2, MgI2, SmI3, Ph4SbBr, Ph4SbCl, Ph4PBr, Ph4PCl, Ph3(C6H4-OCH3)PBr, Ph3(C6H4-OCH3)PCl, Ph3(C6H4F)PCl, and Ph3(C6H4F)PBr, preferred LiCl, LiBr, LiI and MgCl2.

In one embodiment of the method according to the invention, the at least one catalyst (C) is present in a molar amount of 0.001 to 2.0 mol-%, preferably in an amount of 0.01 to ≤ 1.5 mol-%, more preferred ≥ 0.05 to ≤ 1.0 mol-%, based on the total amount of the at least one polyepoxide compound (B).

### Solvent/s (D)

A solvent (D) is defined in alignment to the general definition as a substance that dissolves a solute, i.e. compound/s (A), compound/s (B) and/or compound/s (C) but does not (chemically) react with compound/s (A), compound/s (B) and the catalyst/s (C), in particular compound/s (A).

Examples for solvents suitable for use in the method according to the invention are organic solvents such as linear or branched alkanes or mixtures of alkanes, mono or polysubstituted halogenated aromatic solvents or halogenated alkane solvents, for example, 1,2-dichlorobenzene, linear or cyclic ester, or polar aprotic solvents such as cyclic carbonate, such as ethylencarbonate or propylencarbonate, *N*-methylpyrrolidone (NMP), sulfolane, tetramethylurea, *N,N'-*dimethylethylenurea or mixtures of the above mentioned solvents and/or with other solvents.

The process can be performed in the presence of a solvent or solvents or in absence of a solvent (D). In a preferred embodiment of the invention the process is performed in the absence of a solvent (D) which is an advantage since no additional energy-intensive and time-consuming solvent removal process, e.g. distillation, is necessary.

In an embodiment of the invention the calculated mass ratio of the sum of the monomeric polyisocyanate compound/s (A), the polyepoxide compound/s (B) and the catalyst/s (C) with respect to the sum of the monomeric polyisocyanate compound/s (A), the polyepoxide compound/s (B), the catalyst/s (C) and the solvent (D) is in the range from 40 wt-% to 100 wt-%, preferred from 50 wt-% to 100 wt-% and more preferred from 60 wt-% to 100 wt-%. The upper mass ratio of 100 wt-% means applying no solvent (D), and leads to a most energy-efficient process since no solvent needs to be separated. The lower mass ratio of 40 wt-% leads to higher amount of solvent (D) optionally comprising that needs to be separated and potentially purified. This leads to a less efficient overall process due to no energy savings.

It is an essential aspect of the invention that the at least one monomeric polyisocyanate compound (A) is added to the at least one polyepoxide compound (B) over a period of ≥ 1 minute to ≤ 50 minutes at a reaction temperature (T_{R}) of ≥ 105°C to ≤ 160° C. These conditions lead to an in situ reaction, wherein the monomeric polyisocyanate compound/s (A) react/s to form an isocyanurate group containing polyisocyanate component (A') and simultaneously this component (A') formed in situ copolymerizes with the polyepoxide compound/s (B).

In a preferred embodiment of the above embodiment the at least one monomeric polyisocyanate compound (A) is added to the at least one polyepoxide compound (B) over a period of ≥ 1 minute to ≤ 50 minutes at a reaction temperature T_{R} of ≥ 110 °C to ≤ 155 °C, most preferred at a reaction temperature of ≥ 110 °C to ≤ 150°C.

In a more preferred embodiment of the invention the at least one monomeric polyisocyanate compound (A) is added to the at least one polyepoxide compound (B) over a period of ≥ 5 minutes to ≤ 45 minutes at a reaction temperature (T_{R}) of ≥ 105°C to ≤ 160° C, more preferred at a reaction temperature T_{R} of ≥ 110 °C to ≤ 155 °C, most preferred at a reaction temperature of ≥ 110 °C to ≤ 150 °C.

In a particularly preferred embodiment of the invention the at least one monomeric polyisocyanate compound (A) is added to the at least one polyepoxide compound (B) over a period of ≥ 10 minutes to ≤ 45 minutes at a reaction temperature (T_{R}) of ≥ 105°C to ≤ 160° C, more preferred at a reaction temperature T_{R} of ≥ 110 °C to ≤ 155 °C, most preferred at a reaction temperature of ≥ 110 °C to ≤ 150 °C.

The at least one monomeric polyisocyanate compound (A) can be added at a uniform or non-uniform-addition rate over the addition period and is preferably added at a uniform addition rate over the addition period.

In a preferred embodiment of the invention, the process comprises the steps:
alpha) Mixing the at least one polyepoxide compound (B) and at least a part of the at least one catalyst (C) forming a mixture (alpha);
beta) Addition of the at least one polyisocyanate compound (A) to the mixture (alpha) at conditions described above.

Another object of the present invention is an epoxy-group terminated and isocyanurate-group containing polyoxazolidinone, obtainable by a method according to the invention.

In an embodiment of the invention, the polyoxazolidinones have epoxy equivalent weights (EEW) of from 100 g/eq to 5000 g/eq, preferable of from 150 g/eq to 3000 g/eq more preferred of from 200 g/eq to 1500 g/eq, wherein the epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

The epoxy-equivalent weight (EEW) of the polyoxazolidinone-group containing prepolymers is defined as the total mass of the substance that contains 1 equivalent of epoxy groups.

In an embodiment of the invention, the epoxy-group terminated polyoxazolidinone has an oxazolidinone weight content of 5 to 50% by weight, preferably 7 to 45% by weight, particularly preferably 10 to 40% by weight. This content has been calculated from the amounts of at least one polyisocyanate and at least one epoxide compound that have been used for the preparation of the epoxy-group terminated polyoxazolidinone, wherein the oxazolidinone group has a molecular weight of 86,07 g/mol. These calculated values are based on essentially 100% conversion. Conversion and selectivity of the reaction towards oxazolidinone are measured and confirmed using analytical methods known to the skilled artisan such as IR (infrared spectroscopy) and/or 13C-NMR spectroscopy.

Another object of the present invention is a composition at least comprising
(Ac) at least one epoxy-group terminated and isocyanurate-group containing polyoxazolidinone, obtainable by a method according to the foregoing description,
(Be) at least one compound having at least one group that is reactive towards terminal epoxy-groups,
(Cc) optionally at least one solvent and
(D_{C}) optionally at least one additive.

Further objects of the present invention are a process for the preparation of said composition comprising at least the step of mixing components (Ac), (Bc), optionally (Cc) and optionally (Dc), the composition obtainable by this process, the use of this composition as a coating formulation, for example as a protective coating formulation, a coating formulation comprising at least this composition, a process for coating of a substrate comprising the step of application of this coating formulation onto the substrate, and a correspondingly coated substrate.

The at least one epoxy-group terminated polyoxazolidinone (Ac) which is used in the composition according to the present invention is present in the composition in an amount of preferably 50 to 95% by weight, more preferably 65 to 95% by weight, particularly preferably 70 to 90% by weight, in each case in respect of the solid content of the composition. The sum of all components in respect of the solid content of the composition according to the present invention adds up to 100% by weight in each case.

The composition according to the present invention comprises at least one compound having at least one functional group that is reactive towards terminal epoxy-groups as component (Be).

In general, component (Be) present in the composition according to the present invention can be any compound which comprises at least one functional group which is reactive towards terminal epoxy-groups of component (Ac).

Component (Bc) which is present in the composition according to the present invention is a hardener, i.e. a curing agent or crosslinker, or curing agent blend. Generally, any hardener known in the art which is appropriate for curing epoxy resins may be used. The hardener of choice may depend on the application requirements.

Preferably, component (Be) is preferably selected form the group consisting of dicyandiamides, substituted guanidines, phenolic compounds, amines, in particular aliphatic amines, benzoxazines, anhydrides, amido amines, polyamides, polyamines, polyesters, polyisocyanates, polymercaptans, urea formaldehyde, melamine formaldehyde resins and mixtures thereof.

For example, in one embodiment, component (Be) is at least one anhydride or a mixture comprising at least one anhydride group. Examples of corresponding preferred components (Be) are selected from the group consisting of phthalic acid anhydride and derivatives, nadic acid anhydride and derivatives, trimellitic acid anhydride and derivatives, pyromellitic acid anhydride and derivatives, benzophenonetetracarboxylic acid anhydride and derivatives, dodecenylsuccinic acid anhydride and derivatives, poly(ethyloctadecanedioic acid)anhydride and derivatives, and mixtures thereof.

In one embodiment, component (Be) is at least one amine. Preferred amines are selected from the group consisting of aliphatic amines, in particular ethanolamine, ethylenediamine, diethylenetriamine (DETA), triethyleneaminetetramine (TETA), dicyandiamide or amine-terminated polyols, of aromatic amines, in particular l-(o-tolyl)-biguanide, methylenedianiline (MDA), toluenediamine (TDA), diethyltoluenediamine (DETDA) and diaminodiphenylsulfone (DADS), of polyaminoamides and mixtures of these amines.

Mercaptans, in particular mercaptan-terminated polysulfide polymers or mixtures thereof, can also be used as component (Be).

A trimellitic acid anhydride based system is most preferably used as component (Be).

A further preferred group of compounds used as component (Be) in the composition according to the present invention are phenol formaldehyde compounds, including, but not limited to, reaction products of aldehydes with phenols. Examples of aldehydes include, but are not limited to, formaldehyde and acetaldehyde. Various phenols can be used such as, but not limited to, phenol, cresol, p-phenylphenol, p-tert-butylphenol, p-tert-amylphenol, cyclopentylphenol, cresylic acid, bisphenol-A, bisphenol-F and combinations thereof. Examples of commercially available phenol formaldehyde crosslinkers such as Aradur 949-2, available from HUNTSMANN, and PHENODUR^{™} PR 612, available from CYTEC Industries, among others. Also acid functional phenols could be used in making phenol formaldehyde resins. Corresponding components (Be) can be unetherified or etherified with alcohols or polyols.

According to a particularly preferred embodiment of the present invention, the at least one compound comprising at least one functional group that is reactive towards terminal epoxy-groups in component (Be) is selected from the group consisting anhydrides, phenol formaldehyde compounds, amines, benzoxazines, amido amines, polyamides, polyamines and mixtures thereof.

The at least one compound having at least one functional group that is reactive towards terminal epoxy-groups (component (Be)) is present in the composition in an amount of 5 to 50% by weight, preferably 5 to 35 % by weight, particularly preferably 10 to 30 % by weight, in each case in respect of the solid content of the composition.

According to a preferred embodiment of the present invention, the weight ratio of epoxy groups of the component (Ac) to the functional groups that are reactive towards terminal epoxy-groups in component (Be) is from 50:50 to 95:5; preferably from 60:40 to 90:10 more preferably from 65:35 to 85:15.

The composition according to the present invention optionally comprises at least one solvent as component (Cc).

The at least one solvent optionally present in the composition according to the present invention can in general be selected from any organic solvents and mixtures of organic solvents that are known to the skilled artisan.

Preferably the at least one solvent is at least one organic solvent selected from the group consisting of aromatic hydrocarbons, for example toluene, xylene or Solvesso 100, ketones, for example methyl ethyl ketone (MEK), methyl isobutyl ketone (MIBK), methyl propyl ketone, isophorone ethyl amyl ketone or methyl n-amyl ketone, alcohols, for example butanol, n-hexanol, amyl alcohol, 2-ethylhexanol or cyclohexanol, ether alcohols and their acetate esters, for example methoxyethanol, ethoxyethanol, butoxyethanol, hexoxyethanol, methoxypropanol, methoxyethyl acetate or ethoxyethyl acetate, methoxypropylacetate (MPA), cyclic ethers, for example tetrahydrofurane (THF), ureas, for example dimethyl propylene urea (DMPU) and mixtures thereof.

The at least one solvent (component (Cc)) can be present in the composition in an amount of 5 to 75% by weight, preferably 15 to 70 % by weight, particularly preferably 30 to 65 % by weight, in each case in respect of the sum of components (Ac), (Be) and (Cc) of the composition.

Optionally and beside components (Ac), (Bc) and optionally (Cc), the composition according to the present invention can comprise at least one additive as component (Dc). An example of such an additive is phosphoric acid.

This at least one additive can be added in an amount of 0.1 % to 5%, preferably 0.1% to 2%, most preferably 0.5 % to 1.5% with respect to the sum of components (Ac), (Bc), (Cc) and (Dc).

The present invention further relates to the process for the preparation of a composition according to the present invention comprising at least the step of mixing components (Ac), (Bc), optionally (Cc) and optionally (Dc).

In general, any methods that are known to the skilled artisan can be used in order to prepare the composition according to the present invention.

Preferably, component (Ac) is added to a suitable reactor, for example a glass bottle, and optionally diluted with solvent component (Cc). To component (Ac) or the solution of (Ac) in (Cc), respectively, is then preferably added the corresponding amount of component (Bc) which is preferably also dissolved in a solvent (component (Cc)). Optionally additives (component (Dc)) can be added afterwards.

The present invention further relates to the composition obtainable by the process according to the present invention, comprising at least the step of mixing components (Ac), (Bc), optionally (Cc) and optionally (Dc).

The present invention further relates to the use of the composition according to the present invention as a coating formulation.

The mentioned coating formulations are, in general known to the skilled artisan. Depending on the specific use of the mentioned coating formulations, specific further components beside the well described components (Ac), (Be) and (Cc) are optionally present in the specific formulations.

Therefore, beside components (Ac), (Be) and (Cc) present in the composition according to the present invention, the coating formulation according to the present invention can also comprise at least one additive. In general, this at least one additive can be selected from any additives that are known to the skilled artisan in the technical field of coating formulations.

Preferably, the at least one additive is selected from the group consisting of residue-free or essentially residue-free thermally decomposable salts, binders which are preferably curable physically, thermally and/or with actinic radiation, crosslinking agents, thermally curable reactive thinners, reactive diluents curable with actinic radiation, coloring and/or effect pigments, transparent pigments, fillers, molecularly dispersible dyes, nanoparticles, light stabilizers, antioxidants, deaerators, emulsifiers, slip additives, polymerization inhibitors, radical polymerization initiators, thermolabile free radical initiators, adhesion promoters, leveling agents, film-forming aids, for example thickeners and shear thinning sag control agents (SCA), flame retardants, corrosion inhibitors, flow aids, desiccants, biocides, matting agents, organic pigments, inorganic pigments, for example zinc oxide, carbon black, or titanium dioxide anti-corrosion pigments, fillers, for example calcium sulfate, barium sulfate, silicates, for example talc, bentonite, kaolin, silicas, oxides, for example aluminum hydroxide, magnesium hydroxide, nanoparticles, organic fillers, for example textile fibers, cellulose fibers, polyethylene fibers, wood flour, titanium dioxide, carbon black, Iron oxide, zinc phosphate, lead silicate, radical scavenger, organic corrosion inhibitors, crosslinking catalysts, for example inorganic and organic salts and complexes of tin, lead, antimony, bismuth, iron or manganese, preferably organic salts and complexes of bismuth and tin, in particular bismuth lactate, ethylhexanoate or dimethylolpropionate, dibutyltin oxide or dibutyltin dilaurate, polymerization inhibitors, defoamers, emulsifiers, for example non-ionic emulsifiers such as alkoxylated alkanols and polyols, phenols and alkylphenols or anionic emulsifiers such as alkali salts or ammonium salts of alkane carboxylic acids, alkane sulfonic acids, and sulfonic acids of alkoxylated alkanols and polyols, phenols and alkylphenols, wetting agents, for example siloxanes, fluorine-containing compounds, carboxylic acid half-esters, phosphoric acid esters, polyacrylic acids and their copolymers or polyurethanes, adhesion promoter, flow aids, film-forming aids, for example cellulose derivatives, flame retardants, low molecular weight, oligomeric and high molecular weight reactive diluents which can participate in the thermal crosslinking, for example polyols such as tricyclodecanedimethanol, dendrimeric polyols, hyperbranched polyesters, polyols based on metathesis oligomers or branched alkanes with more than eight carbon atoms in the molecule, anti-cratering agent, water-miscible or dispersible organic solvents, rheology-controlling additives, crosslinked polymeric microparticles, inorganic layered silicates, preferably smectites, in particular montmorillonites and hectorites, such as aluminum-magnesium silicates, sodium-magnesium and sodium-magnesium-fluorine-lithium layered silicates of the montmorillonite type or inorganic layered silicates such as aluminum-magnesium-silicates, sodium-magnesium and montmorillonite type sodium magnesium fluorine lithium layered silicates, silicas such as aerosils, synthetic polymers with ionic and/or associative groups, for example polyvinyl alcohol, poly(meth)acrylamide, poly(meth)acrylic acid, polyvinyl pyrrolidone, styrene-maleic anhydride or ethylene-maleic anhydride copolymers and their derivatives or hydrophobically modified polyacrylates, associative polyurethane-based thickeners, catalysts, for example a hydrophobic sulfonic acid catalyst based on dinonylnaphthalene disulfonic acid, preferably supplied as a solution in isobutanol (Nacure 155), alcohols, for example butanol or hexanol, stabilizers, for example phosphoric acid, and mixtures thereof. Suitable additives of the type mentioned above are, for example, known from German patent application DE 199 48 004 A1, German patent application DE 199 14 98 A1, German patent DE 100 43 405 C1.

The coating composition according to the present invention comprises the above-mentioned additives or mixtures thereof in general in amounts that are usual in the technical field. Preferably, the mentioned additives are used in an amount of 0.1 to 5% by weight, based on the total amount of the coating formulation.

The present invention further relates to a coating formulation comprising at least a composition according to the present invention. Preferably, the present invention relates to the preferred formulations as mentioned above which comprise the above-mentioned preferred components. In addition, the optional additives as mentioned also apply to the coating formulation according to the present invention.

The present invention further relates to the process for coating a substrate comprising the step of applying of a coating formulation according to the present invention onto the substrate.

The present invention further relates to a coated substrate comprising a coating formulation according to the present invention.

A very wide variety of substrates can be used. Examples include mineral substrates, for example ones made of concrete and/or stone, metallic substrates, for example ones made of iron, steel, copper, brass, bronze, aluminum or titanium, and alloys of the mentioned metals, plastics or wood.

In each embodiment the coating formulation may be applied by various methods, for example via brushing, roller coating, spray coating, for example air-atomized spray, air spray, airless spray, high volume low pressure spray powder coating, dip coating, electrodeposition coating, for example electrostatic bell application, all printing methods like e.g. screen printing, letter-press, gravure, offset, flexographic, pad, relief, intaglio, thermal and digital printing, wash coating, flow coating, flood coating, draw down coating, knife or blade coating, slot dye and/or curtain coating. Either manual or automatic methods can be used.

The present invention further relates to the process for coating a substrate comprising the step of applying of a coating formulation according to the present invention onto the substrate and the step of curing the coating formulation.

The curing step is preferably conducted at a temperature of 20 to 250°C, preferably from 100 to 250 °C, particularly preferred 110 to 210 °C. The curing step is preferably conducted for a time of 7 to 40 min., particularly preferred 10 to 20 min. An ordinary person skilled in the art will select the curing temperature and/or curing time according to the chemistry of component (Be).

The present invention further relates to a coated substrate comprising a cured coating formulation according to the present invention.

### Experimental part:

The present invention will be further described with reference to the following examples without wishing to be limited by them.

### I. Polyoxazolidinone prepolymers:

The following chemicals and compounds have been used:
Diisocyanate compounds (A)
   - MDI:: Desmodur^{®} VP.PU 1806, methylene diphenyl diisocyanate (MDI), >99 %, Covestro AG, Germany
   - pMDI:: Desmodur^{®} 44V10L, mixture of methylene diphenyl diisocyanate (MDI) with isomers and homologues of higher functionality, NCO content 30.5 to 32.5% by weight.
Epoxide compounds (B)
   - Araldite DY-D/CH: Butanediol diglycidyl ether (BDDE), EEW 118-125 g/eq; was obtained from HUNTSMAN Advanced Materials (Deutschland) GmbH, Germany.
   - ipox RD 20:: Trimethylolpropanpolyglycidylether, EEW 140 to 150 g/eq, was obtained from ipox chemicals GmbH, Germany.
   - Catalysts (C) TPPCl: Tetraphenylphosphonium chloride, purity >99 %, was obtained from Sigma Aldrich

The above listed compounds were used as received without further purification.

### Characterisation of polyoxazolidinone prepolymers

### IR

IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone prepolymer (2 mg) was applied to the diamond probe and the IR spectrum recorded averaging over 24 spectra obtained in the range of 4000 to 400 cm⁻¹ with a resolution of 4 cm⁻¹.

### Epoxy Equivalent Weight (EEW)

The epoxy equivalent weight was measured with a Metrohm 888 Titrando using a potentiometric hydrochloric acid titration. The epoxy sample was added to a 250 mL beaker and then mixed with tetrabutylammonium bromide (TBAB) in glacial acetic acid (64.5 g/L). Then the solution was titrated with a peracetic acid (0.1 mol/L) until after the equivalent point.

### GPC

GPC measurements were performed at 40 °C in tetrahydrofuran (THF, flow rate of 1.0 mL min⁻¹). The column set consisted of 3 consecutive columns (PSS SDV, 5 µm, 8x50 mm precolumn, 2 PSS SDV linear S, 5 µm, 8x300 mm). Samples (concentration 2-3 g L⁻¹, injection volume 20 µL) were injected employing an Agilent technologies 1200 series auto sampler. An RID detector of the Agilent 1200 series was used to follow the concentration at the exit of the column. Raw data were processed using the PSS WinGPC Unity software package. Polystyrene of known molecular weight was used as reference to calculate the molecular weight distribution (PSS ReadyCal Kit in an area of 266 Da to 66.000 Da was used). The number average molecular weight measured by GPC is denominated as Mₙ(GPC) in the examples.

### Reactor

Under a continuous flow of argon, the reactions were performed in a 2000 ml two-neck roundbottom flask. For samples were a dropwise addition was desired, a syringe pump (KD Scientific Inc.) was connected to the flask to add the diisocyanate compound to the catalyst (C) dissolved in the diepoxide compound.

### Example 1 (comparative):

Synthesis of epoxy-terminated polyoxazolidinone-based prepolymers with Araldite DY-D/CH as compound (B-1) and with MDI as compound (A) using TPPCl as compound (C) with molar ratio of epoxy groups to isocyanate groups of 2.5:1 at 180 °C.

A reactor as previously described was charged with TPPCl (0.23 g, 0.61 mmol) and Araldite DY-D/CH (150 g, 1,23 mol). The reactor was closed an inertised with argon. The mixture was stirred (400 rpm) and heated to 180 °C. After 10 mins at this temperature, MDI (61.6 g, 246 mmol) as compound (A) was added dropwise over a period of 60 minutes. After 3 h, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1750 cm⁻¹.

In the IR spectrum the characteristic signal for isocyanurate groups at 1705 cm⁻¹ was not observed. The EEW was determined to be 263 g/eq.

### Example 2 (comparative):

Synthesis of epoxy-terminated polyoxazolidinone-based prepolymers with Araldite DY-D/CH as compound (B-1) and with MDI as compound (A) using TPPCl as compound (C) with molar ratio of epoxy groups to isocyanate groups of 2.5:1 at 100 °C.

A reactor as previously described was charged with TPPCl (0.23 g, 0.61 mmol) and Araldite DY-D/CH (150 g, 1,23 mol). The reactor was closed an inertised with argon. The mixture was stirred (400 rpm) and heated to 130°C. After 10 mins at this temperature, MDI (61.6 g, 246 mmol) as compound (A) was added in one portion and carefully cooled to 100 °C, until the exothermal reaction was completed (inside thermometer). Afterwards, the mixture was heated to 100 °C for an overall reaction time of 3 h. After this time, the reaction mixture was allowed to cool to room temperature. The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1750 cm⁻¹.

In the IR spectrum the characteristic signal for isocyanurate groups was observed at 1705 cm⁻¹. The GPC and EEW were not determined due to the insolubility of the product.

### Example 3 (comparative):

Synthesis of epoxy-terminated polyoxazolidinone-based prepolymers with Araldite DY/D-CH, ipox RD 20 in a 1:1 (wt/wt) ratio and MDI and pMDI using TPPCl with a molar ratio of epoxy groups to isocyanate groups of 2.5:1.

A reactor as previously described was charged with Araldite DY/D-CH (150 g, 1.23 mol epoxy groups). The reactor was closed an inertized with argon. The mixture was stirred (400 rpm) and heated to 185 °C. TPPCl (83 mg, 0.22 mmol) was added in one portion. ipox RD20 (150 g, 1.00 mol) was added to the mixture. After 10 minutes at this temperature, a mixture of MDI (74.38 g, 594.4 mmol isocyanate groups) and pMDI (39.26 g, 297.3 mmol isocyanate groups) was added dropwise over a period of 90 minutes. After the end of the addition the mixture was stirred 3.5 h at 185 °C and subsequently allowed to cool to room temperature. The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1749 cm⁻¹.

In the IR spectrum the characteristic signal for isocyanurate groups at 1705 cm⁻¹ was not observed. The EEW was determined to be 276 g/eq.

### Example 4 (inventive):

Synthesis of epoxy-terminated polyoxazolidinone-based prepolymers with Araldite DY-D/CH as compound (B-1) and with MDI as compound (A) using TPPCl as compound (C) with molar ratio of epoxy groups to isocyanate groups of 2.5:1 at 120 °C.

A reactor as previously described was charged with Araldite DY-D/CH (50.0 g, 410 mmol) and the reactor was closed and inertised with argon. The mixture was stirred (200 rpm) and heated to 150 °C for 30 minutes. Then, TPPCl (0.077 g, 0.21 mmol) was added in one portion and MDI (20.5 g, 164 mmol) as compound (A) was added dropwise over a period of 15 min. During this time, the heating block was removed, until the addition of MDI was completed. Afterwards, the mixture was heated to 120 °C for an overall reaction time of 3 h. After this time, the reaction mixture was allowed to cool to room temperature.

The completion of the reaction was confirmed by the absence of the isocyanate band (2260 cm⁻¹) in the IR spectrum from the reaction mixture.

In the IR spectrum the characteristic signal for the oxazolidinone carbonyl group was observed at 1750 cm⁻¹.

In the IR spectrum the characteristic signal for isocyanurate groups was observed at 1705 cm⁻¹. The EEW was determined to be 158.

### II. Compositions comprising the polyoxazolidinone prepolymers :

The following chemicals and compounds have been used:
Aradur 3380-1 CH: modified anhydride hardener from HUNTSMAN Advanced Materials (Deutschland) GmbH, Germany. Low molecular acid hardener for epoxy based can and also powder coatings. Acid number 500-540 mg KOH/g, anhydride content 3.00-4.00 eq/kg.

### Solvents

- MPA: 1-methoxypropyl-2-acetate, anhydrous, was obtained from Azelis, St. Augustin.
- n-butanol: Obtained from Kraemer and Martin, St. Augustin

### Methods of characterization:

### Pendulum damping

The pendulum damping according to König was determined to DIN EN ISO 1522:2007-04 on glass plates.

### Solvent resistance

To test the coatings for solvent resistance, small amounts of each of the solvents xylene, 1-methoxypropyl-2-acetate, ethyl acetate and acetone were placed in test tubes and provided with a cottonwool pad at the opening, thus forming a solvent-saturated atmosphere within the test tubes. The test tubes were subsequently brought with the cotton pad onto the surface of the coating, where they remained for 5 minutes. After the solvent had been wiped off, the film was examined for destruction/softening/loss of adhesion and rated (0: no change, 5: film completely dissolved). The evaluations reported are those for the four solvents in the order in each case of xylene (X), 1-methoxypropyl-2-acetate (MPA), ethyl acetate (EA) and acetone (A) in the form of four successive digits. These were determined according to DIN EN ISO 4628-1:2016-07

The solvent resistance test is done additionally by counting the number of double rubs, i.e. forwards and back, necessary to remove the coating down to the metal. Rubbing is carried out with a piece of cotton wool-soaked in methyl ethyl ketone. The result is reported as a number of double rubs.

### Chemical resistance

To test the coatings towards chemical resistance towards water and base different methods were employed. 10% by weight solution of NaOH was deposited on the coatings and covered with a small glass vial. A cotton pad was immersed in water and then placed on top of a coating which was then covered with a small glass vial. The solutions remained on the coatings for 24 h. After this time, fresh water was used to remove the chemical from the coatings. The panel was then dried with paper and then the panel were examined firstly for visible changes and then by using a fingernail to scratch the surface. The observations were rated as 0: no change, 1: small ring observed, 5: film completely dissolved without fingernail scratch. These were determined according to DIN EN ISO 4628-1:2016-07

### Stacking strength

To determine the stacking strength of the coating square meter panels (10 cm x 10 cm) of tinplate was used as a substrate. Filter paper circles from Schleicher and Schuell (55 mm, `black ribbon') were placed on top of the coatings, and a second plate facing downwards was placed on top. Above the coated plates a 10 cm metal plate went on top of these followed by a 5 kg weight. This set up was positioned in the oven for 16 h at 50 °C. After completion of the test, the panels were removed from the oven and separated. The results were reported based on a visible test as to how many fibers were observed on the coated panels. The panels are rated from 0 to 5 where 0 has no visible effect to the coating surface and 5 means the filter paper was not easy to remove from the coating.

### Wedge bend

The wedge bend test is conducted to determine the flexibility, this is done after ageing of the panels for at least 1 day at room temperature. A cooled panel (100 mm by 40 mm) is bent over a 5 mm cylindrical mandrel. The folded panel thus produced is then impacted (9 N) in a device (the wedgebend tester, Erichsen model 471) to form a wedge-shaped contour, flat at one end and 6 mm diameter at the other end. This test piece is then immersed in a 10% by weight copper sulfate in 10% by weight aqueous hydrochloric acid solution for a few seconds. This stains any cracks that occur in the coating. The width in centimeters of the cracked surface is measured starting from the flat side, hence the larger the number the greater the destruction to the coating.

### Sterilization test

The sterilization test is carried out on by first stretching the panels into a curved shape of approximately 300 °C. The coated panels are then placed into a sterilizer at a temperature of 121 °C for 1 hour in the presence of water. The plates are then quickly cooled to 50 to 60 °C in 15 minutes and removed from the machine. The panels are then paper dried and immediately evaluated for bubbles, white colour, and removal of the coating from the panel. The surface is also scratched with the fingernail to determine the damage caused to the coating. The result is reported from 0 to 5, wherein 0 means there is no changed observed and 5 means the coating is completely destroyed.

### Presolutions

Because of the high viscosity (30-50 000 mPas) the epoxy products were first dissolved in a 50% solution of methoxypropyl acetate for better handling. 25 parts per weight of the epoxy is added to a glass bottle and diluted with the same amount of methoxypropyl acetate. The glass bottle is closed and stored at 50 °C in an oven. The resulting solution is stable for several months to use.

Aradur 3380-1 CH is solid and should be diluted in methoxypropyl acetate as a 30% solution (clear liquid) or a 50% (on solid) thick, white paste. The glass bottle is closed and stored at 50 °C in an oven. The resulting solution is stable for several months to use.

### Example 5 (comparative):

17 g of the solution of the product of Example 3 (50% in methoxypropyl acetate) was added to 3 g Aradur 3380-1 CH (50% in methoxypropyl acetate) . 1.67 g of n-butanol was added. This corresponds to a mixing ratio of 85:15 epoxy product to Aradur 3380-1 CH, solid to solid. The formulation is mixed for 30 seconds at 2850 rpm in the speed mixer. The resulting solution is slightly brown, the potlife is longer than 24h.

### Example 6 (inventive):

Examples 6 was prepared using the product of Example 4 and 2.09 g of n-butanol. The experimental details were as described above.

### Application

The formulations were applied on tin white coated plates E1 with dimensions of 250 x 200 x 0.24 mm³. The white coated plates are thoroughly cleaned and degreased before coating, e.g. with ethyl acetate or acetone. A 0.7-meter spiral applicator (equivalent to 42 µm wet) is used to apply the coating. With this spiral applicator the white plates are coated as completely as possible. After application and approximately 5 minutes ventilation time, the coatings are cured in the air oven for 12 min at 200 °C. The dry layer thickness after curing should be 10 µm.

### Application Results

**Table 1**

| | Example 5 | Example 6 |
|---|---|---|
| Hardness [sec] | 218 | 216 |
| Solvent resistance (Xy/MPA/EA/Acetone) | 0001 | 0001 |
| Chemical resistance | | |
| De-ionized water | 0 | 0 |
| base | 2 | 3 |
| **Stacking strength** | 2 | 0 |
| MEK double rubs | >100 | >100 |
| Sterilization test | No change | No change |
| Wedge-bend test | 3.1/3.2/2.7 | 3.2/3.0/2.9 |

### Results

Example 5 was prepared with the high temperature produced prepolymer of Example 3; whereas Example 6 was prepared with the low temperature produced prepolymer of Example 4. The pendulum hardness, solvent and chemical resistance, MEK double rubs, sterilization and wedge bend test were all comparable. However Example 6 showed superior stacking strength (0 vs. 2). This result shows that the material can be processed more quickly which can be advantageous in production.

## Claims

1. A process for producing an epoxy-group terminated and isocyanurate-group containing polyoxazolidinone comprising
reacting at least one monomeric polyisocyanate compound (A) with at least one polyepoxide compound (B) in the presence of at least one catalyst (C),
at a molar ratio of the epoxy groups of the at least one polyepoxide compound (B) to the isocyanate groups of the at least one monomeric polyisocyanate compound (A) of ≥ 2:1 to ≤ 25:1,
wherein the at least one monomeric polyisocyanate compound (A) is added to the at least one polyepoxide compound (B) over a period of ≥ 1 minute to ≤ 50 minutes at a reaction temperature (T_{R}) of ≥ 105° C to ≤ 160° C.

2. The process according to claim 1, wherein the at least one monomeric polyisocyanate compound (A) is added to the at least one polyepoxide compound (B) over a period of ≥ 5 minutes to ≤ 45 minutes.

3. The process according to claim 1 or 2, wherein the reaction temperature (T_{R}) is ≥ 110°C to ≤ 155°C.

4. The process according to one of claims 1 to 3, wherein the molar ratio of epoxy groups of the at least one polyepoxide compound (B) to the isocyanate groups of the at least one the monomeric polyisocyanate compound (A) is from ≥ 2.6:1 to ≤ 7:1.

5. The process according to one of claims 1 to 4, wherein the at least one monomeric polyisocyanate compound (A) is at least one monomeric araliphatic polyisocyanate compound and/or at least one monomeric aromatic polyisocyanate compound.

6. The process according to one of claims 1 to 5, wherein the at least one polyepoxide compound (B) is at least one aliphatic linear polyepoxide compound and /or at least one aliphatic branched polyepoxide compound and/or at least one aromatic polyepoxide compound.

7. The process according to one of claims 1 to 6, wherein the at least one monomeric polyisocyanate compound (A) is at least one monomeric aromatic polyisocyanate compound and the at least one polyepoxide compound (B) is at least one aliphatic linear polyepoxide compound and /or at least one aliphatic branched polyepoxide compound

8. An epoxy-group terminated and isocyanurate-group containing polyoxazolidinone obtainable according to any of claims 1 to 7.

9. A composition at least comprising
(Ac) at least one epoxy-group terminated and isocyanurate-group containing polyoxazolidinone, according to claim 8,
(Be) at least one compound having at least one group that is reactive towards terminal epoxy groups,
(Cc) optionally at least one solvent and
(D_{C}) optionally at least one additive.

10. A process for the preparation of a composition according to claim 9, comprising at least the step of mixing components (Ac), (Bc), optionally (Cc) and optionally (Dc).

11. Use of a composition according to claim 9 as or in a coating formulation.

12. Coating formulation comprising at least a composition according to claim 9.

13. Process for coating a substrate comprising the step of applying a coating formulation according to claim 12 onto the substrate and optionally the step of curing the formulation.

14. A coated substrate comprising a coating formulation according to claim 13.
